# EUROPÄISCHE PATENTANMELDUNG

(11) **EP 0 830 956 A2**
(43) Veröffentlichungstag der Anmeldung: **25.03.1998**
(21) Anmeldenummer: 97112487.0
(22) Anmeldetag: 22.07.1997
(51) Int. Cl.: B60G 7/00, B60G 11/12

(54) **Einrichtung zur Lagerung einer Feder bzw. eines Führungslenkers einer Fahrzeugachse**

(30) Priorität: 20.09.1996 DE 29616358 U
(71) Anmelder: Otto Sauer Achsenfabrik Keilberg, 63856 Bessenbach-Keilberg (DE)
(72) Erfinder: Löber, Roland, 63768 Hösbach (DE); Hock, Helmut, 63856 Bessenbach (DE)
(74) Vertreter: KEIL & SCHAAFHAUSEN Patentanwälte

(57) **Zusammenfassung**

Die Erfindung bezieht sich auf eine Einrichtung zur Lagerung einer Feder bzw. eines Führungslenkers (1) einer Fahrzeugachse, bei welcher das vordere Ende der Feder bzw. des Führungslenkers (1) über ein Federauge bzw. Lenkerauge (2) mittels einer Lagerbuchse (3) und eines in zueinander ausgerichteten Öffnungen (4) von Haltebockschenkeln (5) und einem Bolzenaufnahmekanal (6) der Lagerbuchse (3) aufgenommenen Querbolzens (7) an einem chassisfesten Haltebock (8) schwenkbar gelagert ist, wobei zwischen einem jeweiligen Haltebockschenkel (5) und der Lagerbuchse (3) Auflaufmittel für die Lagerbuchse (3) vorgesehen sind, wobei die Auflaufmittel für die Lagerbuchse (3) von den beiden je ein Loch (9) für die Aufnahme des Querbolzens (7) aufweisenden Schenkeln (10) eines U-Profils (11) gebildet sind, wodurch eine einfachere und schnellere Montage und Demontage der Auflaufmittel möglich ist.

## Beschreibung

Die Erfindung bezieht sich auf eine Einrichtung zur Lagerung einer Feder bzw. eines Führungslenkers einer Fahrzeugachse, bei welcher das vordere Ende der Feder bzw. des Führungslenkers über ein Federauge bzw. Lenkerauge mittels einer Lagerbuchse und eines in zueinander ausgerichteten Öffnungen von Haltebockschenkeln und einem Bolzenaufnahmekanal der Lagerbuchse aufgenommenen Querbolzens an einem chassisfesten Haltebock schwenkbar gelagert ist, wobei zwischen einem jeweiligen Haltebockschenkel und der Lagerbuchse Anlaufmittel für die Lagerbuchse vorgesehen sind.

Derartige Lagereinrichtungen finden insbesondere Anwendung bei der Aufhängung von Fahrzeugradachsen mit starrem Achskörper, bei welcher die in vertikaler Richtung der Tragfedern abgefederte Radachse in Fahrzeuglängs- und -querrichtung durch zwei bspw. als Blattfedern ausgebildete Längslenker geführt wird, sowie die Federn bzw. Lenker an ihrem hinteren Ende starr mit dem Achskörper der Radachse verbunden und an ihrem vorderen Ende über ein eingerolltes Federauge um eine in Fahrzeugquerrichtung verlaufende horizontale Achse schwenkbar an dem Fahrzeugchassis angelenkt sind und zusammen mit dem Achskörper einen U-förmigen Stabilisator bilden. Die Federn bzw. Führungslenker können dabei ein- oder mehrlagig sein. Die Schwenklagerung der Feder bzw. des Führungslenkers soll möglichst spielfrei erfolgen.

Bei bekannten Lagereinrichtungen dieser Gattung sind zwischen der Lagerbuchse und den beiden stirnseitig angrenzenden Haltebockschenkeln, zwischen welchen die das Federauge bzw. Lenkerauge aufnehmende Lagerbuchse eingespannt ist, sind zur Verringerung des Verschleißes der Haltebockschenkel Anlaufscheiben vorgesehen, welche zwischen Lagerbuchse und Haltebockschenkeln mit Hilfe des Querbolzens eingeklemmt sind. Die Montage und der Austausch derartiger Anlaufscheiben ist mühsam und zeitaufwendig.

Aufgabe der folgenden Erfindung ist es, eine Lagereinrichtung der eingangs genannten Art dahingehend zu verbessern, daß eine einfachere und schnellere Montage und Demontage der Anlaufmittel möglich ist.

Diese Aufgabe wird erfindungsgemäß z.B. im wesentlichen dadurch gelöst, daß die Anlaufmittel für die Lagerbuchse von den beiden je ein Loch für die Aufnahme des Querbolzens aufweisenden Schenkel eines U-Profils gebildet sind.

Auf diese Weise wird die Montage schon dadurch vereinfacht, daß nicht einzelne Anlaufscheiben in die Lagereinrichtung eingebaut werden müssen, sondern nur ein einziges Teil, nämlich das U-Profil, welches auf einfache Weise in Arbeitsposition gebracht werden kann.

Dabei kann die Montage und Demontage der Anlaufmittel bzw. der Lagerbuchse dadurch noch weiter vereinfacht werden, daß die Lagerbuchse bereits in vormontiertem Zustand zwischen dem U-Profil-Schenkeln, z.B. durch Einspannen, aufgenommen ist, so daß U-Profil und Lagerbuchse eine vormontierte Baueinheit bilden, welche als solche nur noch mittels des Querbolzens zwischen den Haltebockschenkeln festgelegt werden muß.

Zum Zwecke der Einspannung können die U-Profil-Schenkel vor dem Einsetzen der Lagerbuchse in das U-Profil leicht schräg aufeinander zulaufen. Beim Einsetzen der Lagerbuchse in das U-Profil werden die Schenkel des U-Profils gegen die Vorspannung leicht nach außen gedrückt, bis die Lagerbuchse in das U-Profil gelangt, so daß die in den U-Profil-Schenkel vorgesehenen Löcher mit dem Bolzenaufnahmekanal der Lagerbuchse fluchten. In diesem Zustand reicht die von den U-Profilschenkeln ausgeübte Spannung aus, die Lagerbuchse in dem U-Profil zu halten.

Die Sicherung der Lagerbuchse in ihrer vormontierten Position innerhalb des U-Profils kann noch dadurch verbessert werden, daß die U-Profil-Schenkel an dem Rand der beiden Löcher auf den einander zugekehrten Seiten der U-Profil-Schenkel mit einer ringförmigen Vertiefung für die Aufnahme der stirnseitigen Enden der Lagerbuchse ausgestattet sind. In diese ringförmigen Vertiefungen kann die Lagerbuchse bei ihrer Montage unter Berücksichtigung der Vorspannung der beiden U-Profil-Schenkel einrasten.

Wenn die Lagerbuchse, wie an sich bekannt, eine metallene Innenhülse für die Aufnahme des Querbolzens aufweist, kann erfindungsgemäß die Innenhülse mit ihren stirnseitigen Enden in den ringförmigen Vertiefungen der U-Profil-Schenkel aufgenommen sein. Auf diese Weise hat die Lagerbuchse eine eindeutige Lage innerhalb des U-Profils.

Um das Einführen der Lagerbuchse zwischen die U-Profil-Schenkel zu erleichtern, haben vorzugsweise letztere auf den einander zugekehrten Seiten ihrer freien Enden Einführungsschrägen für die Lagerbuchse.

Das erfindungsgemäße U-Profil als Auflaufmittel läßt sich auf einfache Weise aus einem Flachmaterialstreifen, wie Blech, bilden, aus welchem ein im wesentlichen einseitig offenes Kastenprofil gebogen wird.

Das U-Profil ist zweckmäßigerweise aus einem verzinktem Blech hergestellt.

Weiter Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: schematisch im Vertikalschnitt quer zur Fahrzeuglängsrichtung eine die Erfindung aufweisende Lagereinrichtung,
- Fig. 2a: schematisch im Schnitt ein im Rahmen der Erfindung vorgeschlagenes U-Profil kurz vor dem Einsetzen der Lagerbuchse,
- Fig. 2b: eine Dargstellung entsprechend Fig. 2a, wobei jedoch die Lagerbuchse schon bis in ihre endgültige Position gerückt und zwischen den beiden U-Profil-Schenkeln eingespannt ist,
- Fig. 2x: die Einzelheit X von Fig. 2a in vergrößerter Darstellung, und
- Fig. 3a und 3b: in Draufsicht und im Längsschnitt IIIb - IIIb einen Flachmaterialstreifen, aus welchem das U-Profil gemäß den Fig. 2a und 2b gebogen werden kann.

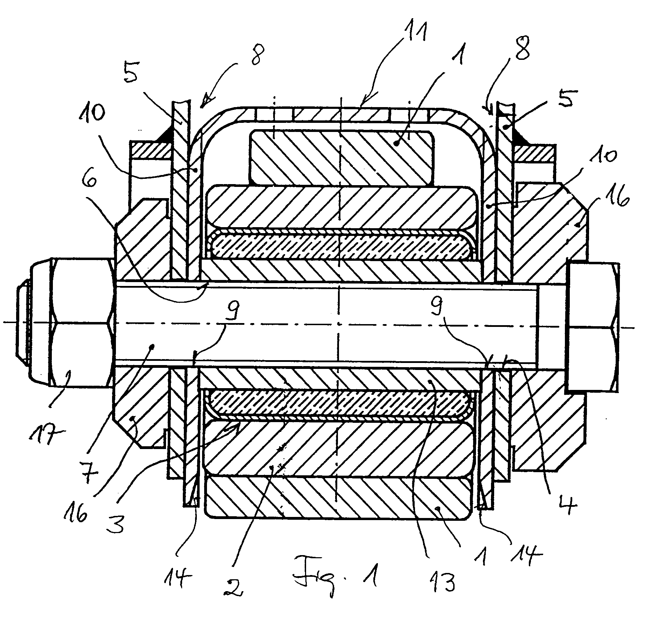

Die in Fig. 1 dargestellte Einrichtung zur Lagerung einer Feder bzw. eines Führungslenkers 1 einer Fahrzeugachse ist an ihrem bzw. seinem vorderen Ende über ein Federauge bzw. Lenkerauge 2 mittels einer Lagerbuchse 3 und eines Querbolzens 7 in einem chassisfesten Haltebock 8 schwenkbar gelagert. Zueinander ausgerichtete Öffnungen 4 in den Haltebockschenkeln 5 dienen der Aufnahme des Querbolzens 7. Mittels der Lagereinrichtung nach Fig. 1 ist die Feder bzw. der Führungslenker 1 schwenkbar gelagert. Dabei ist die Lagerbuchse 3 für das Federauge bzw. Lenkerauge 2 innerhalb der Haltebockschenkel 10 mittels des Querbolzens 7 eingespannt. Der Querbolzen 7 ist über Klemmstücke 16 und mittels Sicherungsmutter 17 an den Haltebock 8 festgelegt. Die Klemmstücke 16 haben einen Querschnitt, welcher größer ist als der Querschnitt der Lagerbuchse 3, so daß die Einspannkräfte von außen gleichmäßig übertragen werden.

Als Anlaufmittel sind gemäß Fig. 1 die Schenkel 10 eines U-Profils 11 zwischen den stirnseitigen Enden der Lagerbuchse 3 und den einander zugekehrten Innenseiten der Haltebockschenkel 5 vorgesehen. Die U-Profil-Schenkel 10 haben den Öffnungen 4 der Haltebockschenkel 5 entsprechende Löcher 9 zur Aufnahme des Querbolzens 7. Gemäß Fig. 1 sind nicht nur die Öffnungen 4 und die Löcher 9, sondern ist auch der Bolzenaufnahmekanal 6 zu den beiden zuvor genannten Öffnungen bzw. Löchern 4, 9 ausgerichtet, so daß eine im wesentlichen spielfreie Lagerung des Federauges bzw. Lenkerauges 2 an dem Haltebock 8 gewährleistet ist.

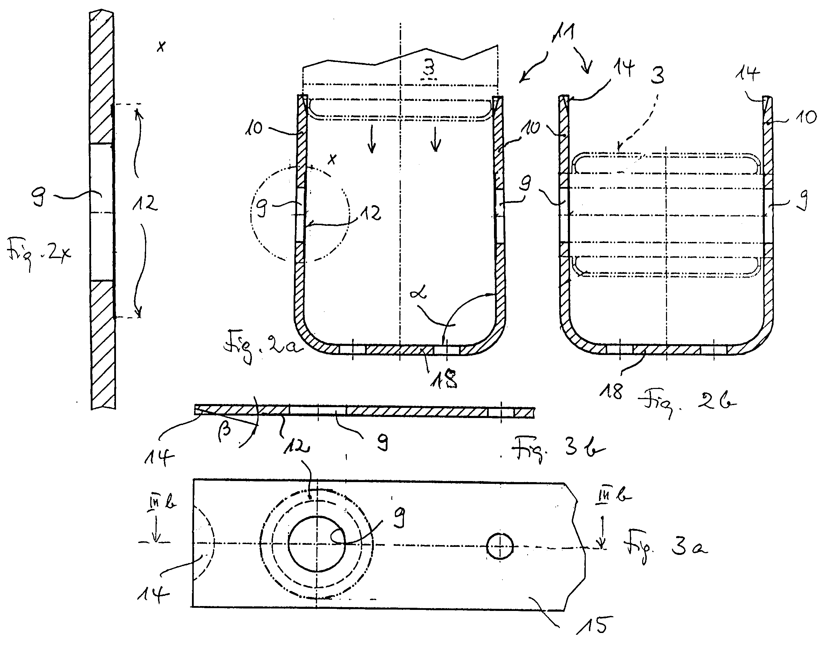

Gemäß Fig. 2a stehen die beiden U-Profil-Schenkel 10 vor der Montage der Lagerbuchse 3 leicht geneigt zueinander, d.h. wenigstens der eine Winkel α zwischen U-Profil-Schenkel 10 und zugehörigem U-Profil-Steg 18 ist geringfügig kleiner als 90°, so daß bei dem mit Pfeilen angedeuteten Einschieben der Lagerbuchse 3 zwischen die beiden U-Profil-Schenkel 10 eine Vorspannung zur Halterung der Lagerbuchse 3 in ihrer endgültigen Arbeitsstellung entsteht, welche in Fig. 2b veranschaulicht ist.

Wie aus den Fig. 2a bis 3b hervorgeht, sind an dem Rand der Löcher 9 der U-Profil-Schenkel 10 auf den einander zugekehrten Seiten der U-Profil-Schenkel 10 ringförmige Vertiefungen 12 vorgesehen, in welche die stirnseitigen Enden der Innenhülse 13 der Lagerbuchse 3 einrasten können.

Zur Vereinfachung und Erleichterung des Einführens der Lagerbuchse 3 zwischen die beiden U-Profil-Schenkel 10 sind auf den einander zugekehrten Seiten der freien Enden der U-Profil-Schenkel 10 Einführungsschrägen 14 für die Lagerbuchse 3 vorgesehen.

Entsprechend Fig. 3a sind die Einführungsschrägen 14 in einem Kreisbogen begrenzt, dessen Radius im wesentlichen dem Radius der Innenhülse 13 der Lagerbuchse 3 entspricht, so daß die Lagerbuchse 3 bei ihrer Montage bereits vorzentriert wird.

Die Fig. 2a und 2b zeigen, daß es sich bei dem U-Profil 11 um ein aus einem Flachmaterialstreifen 15 gebildetes im wesentlichen einseitig offenes Kastenprofil handelt. Der Flachmaterialstreifen 15, aus welchem ein U-Profil 11 gebogen werden kann, ist in den Fig. 3a und 3b in Draufsicht und im Längsschnitt IIIb - IIIb veranschaulicht.

### Bezugszeichenliste:

- 1: Feder bzw. Führungslenker
- 2: Federauge bzw. Lenkerauge
- 3: Lagerbuchse
- 4: Öffnungen
- 5: Haltebockschenkel
- 6: Bolzenaufnahmekanal
- 7: Querbolzen
- 8: Haltebock
- 9: Löcher
- 10: U-Profil-Schenkel
- 11: U-Profil
- 12: Vertiefung
- 13: Innenhülse
- 14: Einführungsschrägen
- 15: Flachmaterialstreifen
- 16: Klemmstücke
- 17: Sicherungsmutter
- 18: U-Profil-Steg
- α: Winkel (Neigung der U-Profil-Schenkel)
- β: Winkel (Einführungsschräge)

## Patentansprüche

1. Einrichtung zur Lagerung einer Feder bzw. eines Führungslenkers (1) einer Fahrzeugachse, bei welcher das vordere Ende der Feder bzw. des Führungslenkers (1) über ein Federauge bzw. Lenkerauge (2) mittels einer Lagerbuchse (3) und eines in zueinander ausgerichteten Öffnungen (4) von Haltebockschenkeln (5) und einem Bolzenaufnahmekanal (6) der Lagerbuchse (3) aufgenommenen Querbolzens (7) an einem chassisfesten Haltebock (8) schwenkbar gelagert ist, wobei zwischen einem jeweiligen Haltebockschenkel (5) und der Lagerbuchse (3) Auflaufmittel für die Lagerbuchse (3) vorgesehen sind, **dadurch gekennzeichnet**, daß die Auflaufmittel für die Lagerbuchse (3) von den beiden je ein Loch (9) für die Aufnahme des Querbolzens (7) aufweisenden Schenkeln (10) eines U-Profils (1) gebildet sind.

2. Einrichtung nach Anspruch 1, **dadurch gekennzeichnet**, daß die Lagerbuchse (3) bereits in vormontiertem Zustand zwischen den U-Profil-Schenkeln (10), z.B. durch Einspannen, aufgenommen ist.

3. Einrichtung nach Anspruch 1 oder 2, **dadurch gekennzeichnet**, daß die U-Profil-Schenkel (10) vor dem Einsetzen der Lagerbuchse (3) in das U-Profil (11) leicht schräg aufeinander zulaufen.

4. Einrichtung nach einem der vorhergehenden Ansprüche, **dadurch gekennzeichnet**, daß die U-Profil-Schenkel (10) an dem Rand der beiden Löcher (9) auf den einander zugekehrten Seiten der U-Profil-Schenkel (10) mit einer ringförmigen Vertiefung (12) für die Aufnahme der stirnseitigen Enden der Lagerbuchse (3) ausgestattet sind.

5. Einrichtung nach Anspruch 4, wobei die Lagerbuchse (3) eine metallene Innenhülse (13) für die Aufnahme des Querbolzens (7) aufweist, **dadurch gekennzeichnet**, daß die Innenhülse (13) mit ihren stirnseitigen Enden in den ringförmigen Vertiefungen (12) aufgenommen ist.

6. Einrichtung nach einem der vorhergehenden Ansprüche, **dadurch gekennzeichnet**, daß die U-Profil-Schenkel (10) auf den einander zugekehrten Seiten ihrer freien Enden mit Einführungsschrägen (14) für die Lagerbuchse (3) ausgestattet sind.

7. Einrichtung nach einem der vorhergehenden Ansprüche, **dadurch gekennzeichnet**, daß das U-Profil (11) aus einem Flachmaterialstreifen (15) gebildetes im wesentlichen einseitig offenes Kastenprofil ist.

8. Einrichtung nach einem der Ansprüche 1 bis 7, **dadurch gekennzeichnet**, daß das U-Profil (11) aus einem verzinkten Blech hergestellt ist.
